# EUROPÄISCHE PATENTSCHRIFT

(11) **EP 1 754 917 B1**
(45) Veröffentlichungstag und Bekanntmachung des Hinweises auf die Patenterteilung: **10.12.2008**
(21) Anmeldenummer: 06117191.4
(22) Anmeldetag: 14.07.2006
(51) Int. Cl.: F16K 31/06

(54) **Zentrierelemente für Magnetventil**
Centering element for magnetic valve
Elément de centrage pour soupape magnétique

(30) Priorität: 17.08.2005 DE 102005038751
(43) Veröffentlichungstag der Anmeldung: 21.02.2007
(73) Patentinhaber: ROBERT BOSCH GMBH, 70442 Stuttgart (DE)
(72) Erfinder: Uhlenbrock, Dietmar, 70734, Fellbach (DE); Bellot, Marc-Olivier, 70197, Stuttgart (DE)

(56) Entgegenhaltungen:
- DE-A1- 3 147 062
- DE-A1- 4 410 157
- DE-A1- 10 146 497
- JP-A- 11 074 118

## Beschreibung

Die Erfindung bezieht sich auf Zentrierelemente mit Dämpfungswirkung für den Magnetkreis von Stellern, insbesondere von Proportionalventilen.

### Stand der Technik

Aus DE 103 13 854 A1 ist ein elektropneumatischer Druckwandler mit temperaturkompensiertem Magnetkreis bekannt. Der elektropneumatische Druckwandler umfasst ein Magnetventil, welches eine Magnetspule umfasst, die in ein Gehäuse eingelassen ist sowie einen im Gehäuse verschiebbar geführten Magnetanker. Diesem ist unter Bildung eines Arbeitsluftspaltes ein Magnetkern gegenüber liegend angeordnet, der eine Durchgangsbohrung aufweist, an der Umgebungsdruck anliegt. Das Magnetventil gemäß DE 103 13 854 A1 weist ein Dehnelement auf, welches aus einem bei Temperaturänderungen sich dehnendem Material gefertigt ist und welches den Arbeitsluftspalt zwischen dem Magnetanker und dem Magnetkern begrenzt. Das Dehnelement ist an einer Einspannstelle einseitig im Magnetanker eingespannt und vom Magnetanker umschlossen. Der in DE 103 13 854 A1 offenbarte Magnetanker umfasst ein hülsenförmig ausgebildetes Einsatzteil, in welchem sowohl der Anker als auch der Magnetkern gelagert sind.

Um eine zentrische Führung des Ankers gemäß der Lösung in DE 103 13 854 A1 in dem hülsenförmig gestalteten Führungselement zu erreichen, ist eine in fertigungstechnischer Hinsicht aufwendige Bearbeitung sowohl des Ankers, des hülsenförmig Führungselements als auch des Magnetkerns erforderlich, da an die Rundheit und die Konzentrizität von Anker und hülsenförmigem Führungselement hohe Anforderungen gestellt sind, um eine leichtgängige Betätigung eines Proportionalventils wie z.B. eines elektropneumatischen Druckwandlers zu ermöglichen.

An Verbrennungskraftmaschinen werden z.B. klappenförmig ausgebildete Luft- bzw. Abgasleitelemente für die Abgasrückführung und die Saugrohrverstellung, um zwei Beispiele zu nennen, sowie an Ladeeinrichtungen die Leitschaufeln (VTG-Turbolader) durch Proportionalventile wie z.B. elektropneumatische Druckwandler und eine federbelastete Unterdruckdose angesteuert. Es besteht die Entwicklungstendenz, die eingesetzten Proportionalventile zunehmend unmittelbar an den Verbrennungskraftmaschinen anzubauen statt wie bisher an der Karosserie. Der Grund hierfür liegt darin, dass zunehmend fertig montierte und geprüfte Motoren an die Endmontage geliefert werden und zum Teil komplett montierte Verbrennungskraftmaschinen an Automobilhersteller verschickt werden. Erfolgt der Anschluss der Verbrennungskraftmaschine an die dieser jeweils zugewiesenen elektropneumatischen Wandler in der Endmontage, kann bei sich dann einstellenden Problemen die Fehlerursache nicht eindeutig ermittelt werden. Ferner wird durch die Montage eines elektropneumatischen Druckwandlers an der Verbrennungskraftmaschine der elektropneumatische Druckwandler höher belastet Einerseits steigt das Temperaturniveau, welchem der elektropneumatische Druckwandler ausgesetzt ist, von etwa 130°C auf in der Spitze etwa 160°C, andererseits treten von drei g auf 40 g gesteigerte Beschleunigungswerte auf, welchen der an der Verbrennungskraftmaschine montierte elektropneumatische Druckwandler nunmehr ausgesetzt ist.

Um den Steller des elektropneumatischen Druckwandlers in seiner korrekten Regellage zu halten, werden hochgenau gefertigte Führungen eingesetzt, welche eine spezielle Gleitbeschichtung mit einem Anteil von PTFE aufweisen. Die ergriffenen Maßnahmen führen einerseits zu deutlich höheren Herstellkosten und können die erhöhten Anforderungen, die beim Anbau eines elektropneumatischen Druckwandlers an der Verbrennungskraftmaschine gefordert werden, nur unzureichend erfüllen.

Aus der JP 11074118 A ist ein Ventil mit pneumatischer Einheit und magnetischer Einheit mit Magnetanker und Führungshülse bekannt. An der Führungshülse sind verlängerte Führungsabschnitte als Wandabschnitte der Führungshülse ausgebildet, die an einem axialen Ende von der Führungshülse abstehen. Die dem Anker zugewandte Innenseite der Führungsabschnitte schließt sich ohne Stufe an die Innenwand der Führungshülse an. Vom Anker 8 stehen Führungsvorsprünge 27 ab, die in schlitzförmige Ausnehmungen 19 der Führungsabschnitte 17 eingreifen und dadurch eine Verdrehung des Ankers verhindern.

Die DE 44 10 157 A1 offenbart ein hydraulisches Ventil mit Magnetteil. In einer Führungshülse des Magnetteils ist ein Anker gelagert, der über Zentrierelemente zur Führungshülse zentriert ist. Die Zentrierelemente sind als metallische Kugeln ausgebildet, die in einer Ringnut des Ankers angeordnet sind und in Führungsrillen der Führungshülse und in Führungsrillen des Ankers eingreifen.

### Darstellung der Erfindung

Der erfindungsgemäß vorgeschlagenen Lösung folgend wird der Anker eines eine Magneteinheit und eine Pneumatikeinheit aufweisenden Proportionalventils wie z.B. eines elektropneumatischen Druckwandlers von mindestens einem im Ankerbereich angeordneten ringförmigen Zentrierelement aus einem elastisch verformbaren Material zentriert. Der mit einer im Gehäuse des elektropneumatischen Druckwandlers vorgesehenen Magnetspule zusammen wirkende Anker stellt den Antrieb des Proportionalventils dar.

Das mindestens eine Zentrierelement kann z.B. O-ringähnlich ausgeführt werden. Dies bedeutet, dass bei mindestens einem, bevorzugt zwei am Anker angebrachten O-ringförmig ausgebildeten Zentrierelementen der Reibungseinfluss der O-ringförmig ausgebildeten Zentrierelemente äußerst gering ist, da der Anker mit den daran aufgenommenen bevorzugt zwei O-ringförmig ausgebildeten Zentrierelementen nur an zwei Berührlinien an einer den Anker umgebenden Führungshülse anliegt, so dass der Reibungseinfluss der O-ringförmig ausgebildeten Zentrierelemente vernachlässigt werden kann.

Wird der Anker der Magneteinheit des Proportionalventils, wie z.B. eines elektropneumatischen Druckwandlers durch das mindestens eine O-ringförmig ausgebildete Zentrierelement in der Führungshülse zentriert, heben sich bei optimaler, d.h. zentrischer Lage des Ankers die magnetischen Querkräfte gegenseitig auf, so dass die Hysterese der Kennlinie kleiner wird. Durch die exzentrische Lage eines Ankers können unerwünschte Querkräfte von 10 N und mehr entstehen, die bisher durch aufwendige Gleitpaarungen in der Ankerführung beherrscht werden mussten. Gleitpaarungen mit den oben erwähnten speziellen Gleitbeschichtungen mit PTFE-Anteil stellen einen erheblichen fertigungstechnischen Aufwand dar, da das Paaren von Bauteilen oder hohe Oberflächengüte erzeugende Schleifprozesse erforderlich sind.

Durch die erfindungsgemäß vorgeschlagene Lösung, den Anker mit mindestens einem diesen zentrierenden Zentrierelement zu versehen, werden die Toleranzketten in den Führungen deutlich verkürzt und damit fertigungstechnisch beherrschbar gemacht. Im Vergleich zu den oben erwähnten Lösungen, zur Vermeidung unerwünschter Querkräfte eine Paarung von Bauteilen vorzunehmen oder aufwendige Gleitbeschichtungen einzusetzen, liegen die Kosten des O-ringförmig ausgebildeten Zentrierelements, welches lediglich eine Berührlinie zu einer den Anker umgebenden Führungshülse ausbildet, deutlich geringer. Der erfindungsgemäß vorgeschlagene Einsatz von O-ringförmig ausgebildeten Zentrierelementen hat ferner den Vorteil, dass von den eingesetzten O-ringförmig ausgebildeten Zentrierelementen eine schwingungsdämpfende Wirkung ausgeht und durch diese der Eintrag von Medien wie z.B. Schmutzpartikel in die Ankerführung verhindert wird. Ist einmal Öl in den Spalt zwischen dem Anker der Magneteinheit und die Magnetspule der Magneteinheit eingetragen, so bleibt aufgrund der Abdichtwirkung der O-ringförmig ausgebildeten Zentrierelemente dieses Öl im Spalt vorhanden und verlässt diesen nicht.

Im Proportionalventil können die O-ringförmig ausgebildeten Zentrierelemente zum einen am Arbeitsspalt zwischen dem magnetischen Stellkern und dem Anker angebracht werden, wobei z.B. ein O-ringförmig ausgebildetes Zentrierelement an einem gestuften Ende eines Stellkerns aufgenommen sein kann. Im oberen Bereich des Ankers kann in dessen Außenumfangsfläche eine Ausnehmung erzeugt werden, in welcher ein weiteres O-ringförmig ausgebildetes Zentrierelement eingelassen sein kann. Ferner ist es auch möglich, den magnetischen Stellkern mit einem O-ringförmig ausgebildeten Zentrierelement zu versehen und diesen auf diese Weise in der Führungshülse zu zentrieren, die sich sowohl um den Magnetanker als auch um den magnetischen Stellkern erstreckt.

### Zeichnung

Anhand der Zeichnung wird die Erfmdung nachstehend eingehender beschrieben, wobei die einzige Figur einen Schnitt durch ein als elektropneumatischen Druckwandler ausgeführte Proportionalventil zeigt, bei welchem der Magnetanker und der Magnetkern in O-ringförmig ausgebildeten Zentrierelementen in einer den Magnetanker und den Magnetkern umgebenden Führungshülse eingelassen sind.

### Ausführungsbeispiel

Der Zeichnung ist ein Schnitt durch ein als elektropneumatischen Druckwandler ausgeführtes Proportionalventil zu entnehmen.

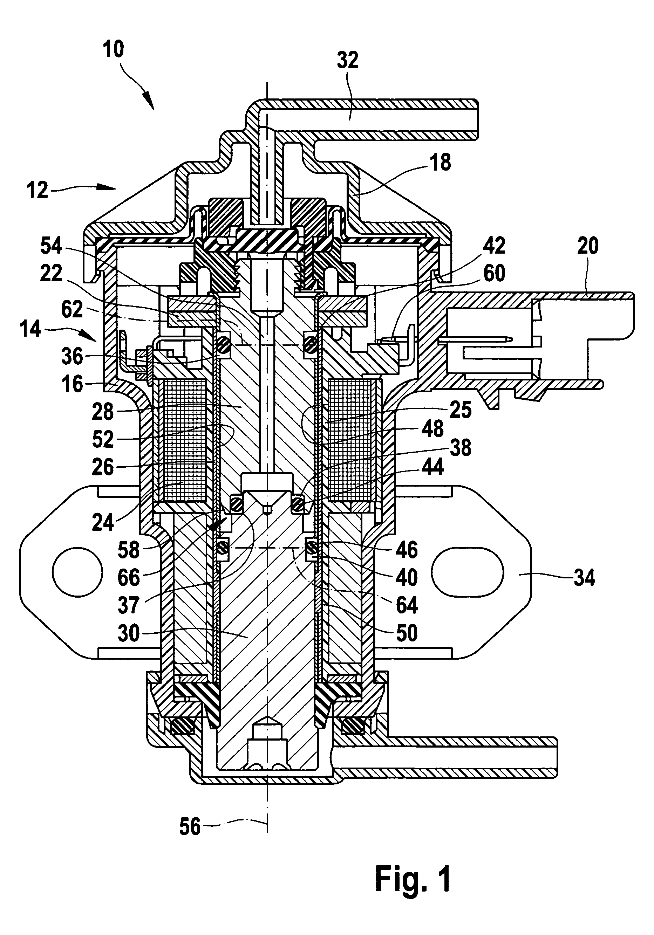

Ein als elektropneumatischer Druckwandler 10 ausgebildetes Proportionalventil 10 gemäß der Darstellung in Figur 1 umfasst eine pneumatische Einheit 12 sowie eine magnetische Einheit 14, die in einem Gehäuse 16 aufgenommen sind. Das Gehäuse 16 ist durch einen Deckel 18 verschlossen. Seitlich am Gehäuse 16 befmdet sich ein Steckeranschluss 20, über welchen mittels einer Kontaktierung 60 eine Magnetspule 24 der magnetischen Einheit 14 bestrombar ist. Die Magnetspule 24 ist von einem Spulenträger 25 aufgenommen.

Die magnetische Einheit 14 umfasst einen Magnetbügel 22, die Magnetspule 24 sowie eine Führungshülse 26, welche sowohl einen Magnetanker 28 als auch einen magnetischen Stellkern 30 umschließt. Die Führungshülse 26 kann ein- oder mehrwandig, so z.B. doppelwandig ausgeführt sein und sowohl durchgängig, den Magnetanker 28 und den magnetischen Stellkern 30 umschließend, ausgeführt sein. Daneben kann die Führungshülse 26 auch mehrere ein- oder mehrwandig ausgeführte Hülsenabschnitte umfassen. Der Magnetanker 28 ist von einer Durchgangsbohrung 54 durchzogen, die symmetrisch zur Symmetrieachse 56 des Magnetankers 28 und der Magnetspule 24 ausgebildet ist. Um ein Verkanten des Magnetankers 28 innerhalb der den Magnetanker 28 und den magnetischen Stellkern 30 umschließenden Führungshülse 26 zu vermeiden, weist der Magnetanker 28 an seinem dem magnetischen Stellkern 30 zuweisenden Ende eine Anfasung 58 auf.

Mit Bezugszeichen 32 ist ein Anschlussstutzen einer in Figur 1 nicht näher dargestellten Unterdruckquelle bezeichnet, über welche an das als elektropneumatischen Druckwandler 10 ausgeführte Proportionalventil 10 ein Unterdruckniveau anlegbar ist. Das als elektropneumatischer Druckwandler ausgeführte Proportionalventil 10 ist mittels eines Flansches 34, der am Gehäuse 16 befestigt ist, an einer Verbrennungskraftmaschine montierbar.

Der Magnetanker 28 weist in seinem der pneumatischen Einheit 12 zuweisenden Bereich eine erste, in seine Mantelfläche ringförmig eingebrachte Ausnehmung 36 auf. In diese erste Ausnehmung 36 des Magnetankers 28 ist ein O-ringförmig gestaltetes erstes Zentrierelement 42 eingelassen. Am unteren Ende des Magnetankers 28 - begrenzt von der Anfasung 58 - befindet sich am Magnetanker 28 eine zweite Ausnehmung 38, welche zusammen mit einer Stufe 37 an der dem Magnetanker 28 zuweisenden Stirnseite des magnetischen Stellkerns 30 einen Käfig 66 zur Aufnahme eines zweiten O-ringförmig konfigurierten Zentrierelements 44 bildet. Ist der Magnetanker 28 wie in der Figur dargestellt, an den magnetischen Stellkern 30 angestellt, bildet die Ausnehmung an der unteren Stirnseite des Magnetankers 28 zusammen mit der Stufe 37 an der Stirnseite des magnetischen Stellkerns 30 den Käfig 66 zur Aufnahme des zweiten, O-ringförmig ausgebildeten Zentrierelements 44.

Optional kann am magnetischen Stellkern 30 ebenfalls eine dritte Ausnehmung 40 hergestellt werden, in die ein drittes Zentrierelement 46, welches ebenfalls O-ringförmig beschaffen sein kann, eingelegt werden kann.

Die bevorzugt O-ringförmig ausgebildeten Zentrierelemente 42, 44 und 46 haben neben ihrer zentrierenden Funktion für den Magnetanker 28 und falls erforderlich für den magnetischen Stellkern 30, des Weiteren eine Abdichtfunktion sowie eine Dämpfungsfunktion. Je nachdem aus welchem Material die O-ringförmig ausgeführten Zentrierelemente 42, 44 und 46 hergestellt werden, lassen sich unterschiedliche Dämpfungsgrade erzielen. Damit kann der Hub des Magnetankers 28 in Bezug auf den magnetischen Stellkern 30 entsprechend gedämpft werden. Ferner tritt hinzu, dass der sich aufgrund fertigungstechnisch bedingter Toleranzen zwischen der Außenumfangsfläche des Magnetankers 28 und der Innenumfangsfläche der Führungshülse 26 unvermeidlich einstellende Spalt abgedichtet werden kann.

Die in der Figur dargestellten ersten, zweiten und dritten Zentrierelemente 42, 44 und 46 können aus einem elastischen Werkstoff wie Gummi oder Elastomer oder aus Textil, Messing, Kunststoff und dergleichen hergestellt werden. Werden die ersten, zweiten und dritten Zentrierelemente 42, 44 und 46 als O-Ringe gefertigt, so ergibt sich ein besonders günstiger Anlagebereich an einer Innenseite 52 der Führungshülse 26, die den Magnetanker 28 und den magnetischen Stellkern 30 überdeckt.

Neben einer Ausführungsform, in welcher die ersten, zweiten und dritten Zentrierelemente 42, 44 und 46 in kreisförmigem Querschnitt ausgebildet werden, können diese ebenso gut mit einem trapezförmigen, einem dreieckförmigen, einem viereckförmigen, einem quadratischen oder einem Vieleck-Querschnitt ausgeführt sein.

Aus der Zeichnung geht hervor, dass die Führungshülse 26 sowohl den Magnetanker 28 als auch den magnetischen Stellkern 30 umgibt. Die Führungshülse 26 liegt an einer Innenseite 48 des Spulenträgers 25 der magnetischen Einheit 14 mit ihrer Außenseite 50 an, während die Innenseite 52 der Führungshülse 26 sowohl den Magnetanker 28 als auch den magnetischen Stellkern 30 umschließt.

Aufgrund der Ausgestaltung der ersten, zweiten und dritten Zentrierelemente 42, 44 und 46 - wie in der Zeichnung dargestellt - ist der Magnetanker 28 durch das in der ersten Ausnehmung 36 eingelassene erste Zentrierelement 42 relativ zur Führungshülse 26 zentriert. Wird das erste Zentrierelement 42 z.B. als O-Ring gefertigt, so ergibt sich zwischen der Innenseite 52 der Führungshülse 26 und dem ersten Zentrierelement 42 eine ringförmig verlaufende Berührlinie 62, entlang welcher das erste Zentrierelement 42 den Magnetanker 28 an der Innenseite 52 der Führungshülse 26 zentriert.

Das zweite Zentrierelement 44 ist - wie in der Zeichnung dargestellt - in der zweiten Ausnehmung 38 aufgenommen, welche durch eine Vertiefung an der unteren Stirnseite des Magnetankers 28 im Bereich von dessen Anfasung 58 und von der komplementär ausgebildeten Stirnseite des magnetischen Stellkerns 30 begrenzt ist.

Zur Vermeidung von magnetischen Querkräften ist gemäß der Zeichnung auch der magnetische Stellkern 56 - versehen mit der dritten Ausnehmung 40 - mit einem dritten Zentrierelement 46 versehen, welches den magnetischen Stellkern 30 relativ zur Führungshülse 26 zentriert. Aufgrund der gewählten Lösung kann eine exzentrische Lage sowohl des magnetischen Stellkerns 30 als auch des relativ zu diesem bewegbaren Magnetankers 28 ausgeschlossen werden, so dass einerseits aufwendige Gleitpaarungen in der Ankerfiihrung entfallen können, die Toleranzketten in diesen Führungen demzufolge deutlich verkürzt und damit fertigungstechnisch besser beherrschbar gemacht werden. Aufgrund der Ausführung des dritten Zentrierelements 46 als O-Ring stellt sich zwischen diesem und der Innenseite 52 der den Magnetanker 28 und den magnetischen Stellkern 30 umgebenden Führungshülse 26 ebenfalls eine ringförmig verlaufende Berührlinie 64 ein. Das im Käfig 66, der durch die beiden komplementär zueinander ausgebildeten Stirnseiten des Magnetankers 28 und des magnetischen Stellkerns 30 gebildet ist, aufgenommene zweite Zentrierelement 44, zentriert den Magnetanker 28 in Bezug zu dem ebenfalls zur Führungshülse 26 über das dritte Zentrierelement 46 zentrierten magnetischen Stellkern 30. Damit ist eine möglichst leichtgängige Zentrier- und Lagerungsmöglichkeit für den Magnetanker 28 geschaffen.

Die ersten, zweiten und dritten Zentrierelemente 42, 44 und 46 verhindern weiterhin, dass z.B. Schmutzpartikel in die engen Führungen zwischen der Mantelfläche des Magnetankers 28 und der Innenseite 52 der Führungshülse 26 gelangen können und die Hubbewegung des Magnetankers 28 behindern. Ist einmal eine reibungsvermindernde Flüssigkeit wie z.B. Öl in den Abschnitt an der Innenseite 52 der Führungshülse 26 gelangt, der sich zwischen dem ersten Zentrierelement 42 und dem dritten Zentrierelement 46 erstreckt, wird der sich einstellende Ölfilm aufgrund der Anordnung der beiden Zentrierelemente 42 und 46 diesen nicht verlassen, da das erste Zentrierelement 42 und das dritte Zentrierelement 46 den Spalt zwischen der Führungshülse 26 und der Außenumfangsfläche des Magnetankers 28 abdichten.

## Patentansprüche

1. Proportionalventil mit einer pneumatischen Einheit (12) und einer magnetischen Einheit (14), die in einem Gehäuse (16) untergebracht sind, wobei die magnetische Einheit (14) einen Magnetanker (28) und einen magnetischen Stellkern (30) umfasst, die von einer Führungshülse (26) umgeben sind, wobei zumindest der Magnetanker (28) mittels mindestens eines Zentrierelements (42) zur Führungshülse (26) zentriert ist, **dadurch gekennzeichnet, dass** das mindestens eine Zentrierelement (42) ringförmig ausgeführt ist und aus einem elastisch verformbaren Material hergestellt ist.

2. Proportionalventil gemäß Anspruch 1, **dadurch gekennzeichnet, dass** an einer dem Magnetanker (28) zuweisenden Seite des magnetischen Stellkerns (30) ein zweites Zentrierelement (44) aufgenommen ist.

3. Proportionalventil gemäß Anspruch 2, **dadurch gekennzeichnet, dass** der magnetische Stellkern (30) mittels eines dritten Zentrierelements (46) zur Führungshülse (26) zentriert ist.

4. Proportionalventil gemäß der Ansprüche 1 bis 3, **dadurch gekennzeichnet, dass** die Zentrierelemente (42, 44, 46) in Ausnehmungen (36, 38, 40) des Magnetankers (28) oder des magnetischen Stellkerns (30) aufgenommen sind.

5. Proportionalventil gemäß der Ansprüche 1 bis 3, **dadurch gekennzeichnet, dass** die Zentrierelemente (42, 44, 46) aus Kunststoff, einem textilen Werkstoff aus Messing oder aus Gummi gefertigt sind.

6. Proportionalventil gemäß der Ansprüche 1 bis 3, **dadurch gekennzeichnet, dass** die Zentrierelemente (42, 44, 46) O-ringförmig ausgeführt sind und einen kreisförmigen oder ovalen Querschnitt aufweisen.

7. Proportionalventil gemäß der Ansprüche 1 bis 3, **dadurch gekennzeichnet, dass** die Zentrierelemente (42, 44, 46) einen trapezförmigen, einen dreieckförmigen, einen viereckigen.oder einen Vieleck-Querschnitt aufweisen.

8. Proportionalventil gemäß Anspruch 2, **dadurch gekennzeichnet, dass** eine dem magnetischen Stellkern (30) zuweisende Stirnseite des Magnetankers (28) mit einer dem Magnetanker (28) zuweisenden Stirnseite des magnetischen Stellkerns (30) einen Käfig (66) bildet, in dem das zweite Zentrierelement (44) aufgenommen ist.

9. Proportionalventil gemäß einem oder mehrerer der Ansprüche 1 bis 8, **dadurch gekennzeichnet, dass** es als elektropneumatischer Wandler (10) ausgeführt ist.

## Claims

1. Proportional valve with a pneumatic unit (12) and with a magnetic unit (14) which are accommodated in a housing (16), the magnetic unit (14) comprising a magnet armature (28) and a magnetic actuating core (30) which are surrounded by a guide sleeve (26), at least the magnet armature (28) being centred with respect to the guide sleeve (26) by means of at least one centring element (42), **characterized in that** the at least one centring element (42) is of annular design and is produced from an elastically deformable material.

2. Proportional valve according to Claim 1, **characterized in that** a second centring element (44) is received on that side of the magnetic actuating core (30) which faces the magnet armature (28).

3. Proportional valve according to Claim 2, **characterized in that** the magnetic actuating core (30) is centred with respect to the guide sleeve (26) by means of a third centring element (46).

4. Proportional valve according to Claims 1 to 3, **characterized in that** the centring elements (42, 44, 46) are received in recesses (36, 38, 40) of the magnet armature (28) or of the magnetic actuating core (30).

5. Proportional valve according to Claims 1 to 3, **characterized in that** the centring elements (42, 44, 46) are produced from plastic, from a textile material, from brass or from rubber.

6. Proportional valve according to Claims 1 to 3, **characterized in that** the centring elements (42, 44, 46) are designed in the form of an O-ring and have a circular or oval cross section.

7. Proportional valve according to Claims 1 to 3, **characterized in that** the centring elements (42, 44, 46) have a trapezoidal, triangular, quadrangular or polygonal cross section.

8. Proportional valve according to Claim 2, **characterized in that** an end face, facing the magnetic actuating core (30), of the magnet armature (28) forms with an end face, facing the magnet armature (28), of the magnetic actuating core (30) a cage (66) in which the second centring element (44) is received.

9. Proportional valve according to one or more of Claims 1 to 8, **characterized in that** it is designed as an electropneumatic transducer (10).

## Revendications

1. Soupape proportionnelle comportant une unité pneumatique (12) et une unité magnétique (14), ces unités étant logées dans un boîtier (16), l'unité magnétique (14) comportant un induit magnétique (28) et un noyau d'actionnement magnétique (30) entourés par un manchon de guidage (26),
au moins l'induit magnétique (28) est centré par au moins un élément de centrage (42) par rapport au manchon de guidage (26),
**caractérisée en ce qu'**
au moins un élément de centrage (42), réalisé avec une forme annulaire, est fabriqué en une matière déformable élastiquement.

2. Soupape proportionnelle selon la revendication 1,
**caractérisée en ce que**
le côté du noyau d'actionnement magnétique (30) tourné vers l'induit magnétique (28) reçoit un second élément de centrage (44).

3. Soupape proportionnelle selon la revendication 2,
**caractérisée en ce que**
le noyau d'actionnement magnétique (30) est centré par un troisième élément de centrage (46) par rapport au manchon de guidage (26).

4. Soupape proportionnelle selon les revendications 1 à 3,
**caractérisée en ce que**
les éléments de centrage (42, 44, 46) sont logés dans des cavités (36, 38, 40) de l'induit magnétique (28) ou du noyau d'actionnement magnétique (30).

5. Soupape proportionnelle selon les revendications 1 à 3,
**caractérisée en ce que**
les éléments de centrage (42, 44, 46) sont fabriqués en matière plastique, en une matière textile, en laiton ou en caoutchouc.

6. Soupape proportionnelle selon les revendications 1 à 3,
**caractérisée en ce que**
les éléments de centrage (42, 44, 46), réalisés sous la forme de joints toriques, ont une section circulaire ou ovale.

7. Soupape proportionnelle selon les revendications 1 à 3,
**caractérisée en ce que**
les éléments de centrage (42, 44, 46) ont une section de forme trapézoïdale, de forme triangulaire, en forme de quadrangle ou de polygone.

8. Soupape proportionnelle selon la revendication 2,
**caractérisée en ce qu'**
une face frontale du noyau magnétique (28) tournée vers le noyau d'actionnement magnétique (30) forme une cage (66) avec la face frontale du noyau d'actionnement magnétique (30) tournée vers l'induit magnétique (28) et cette cage reçoit le second élément de centrage (44).

9. Soupape proportionnelle selon les revendications 1 à 8,
**caractérisée en ce qu'**
elle est réalisée sous la forme d'un convertisseur électropneumatique (10).
